# EUROPÄISCHE PATENTSCHRIFT

(11) **EP 0 885 783 B1**
(45) Veröffentlichungstag und Bekanntmachung des Hinweises auf die Patenterteilung: **31.07.2002**
(21) Anmeldenummer: 98109755.3
(22) Anmeldetag: 28.05.1998
(51) Int. Cl.: B60R 21/20

(54) **Knie-Rückhalteeinrichtung für Fahrzeuge**
Knee bolster for a vehicle
Dispositif de protection des genoux dans un véhicule

(30) Priorität: 19.06.1997 DE 29710745 U
(43) Veröffentlichungstag der Anmeldung: 23.12.1998
(73) Patentinhaber: TRW Occupant Restraint Systems GmbH & Co. KG, 73551 Alfdorf (DE)
(72) Erfinder: Heilig, Alexander, 73550 Wissgoldingen (DE); Schultz, Dirk, 73527 Schwäbisch Gmünd (DE)
(74) Vertreter: Sulzbach, Werner, Dipl.-Chem. Dr.

(56) Entgegenhaltungen:
- EP-A- 0 653 335
- EP-A- 0 684 164
- WO-A-98/15432
- DE-A- 3 908 713
- PATENT ABSTRACTS OF JAPAN vol. 018, no. 335 (M-1627), 24. Juni 1994 & JP 06 080058 A (MAZDA MOTOR CORP), 22. März 1994
- "SIDE IMPACT PROTECTION DEVICE" RESEARCH DISCLOSURE, Nr. 375, 1. Juli 1995, Seite 470 XP000524786
- PATENT ABSTRACTS OF JAPAN vol. 017, no. 083 (M-1369), 18. Februar 1993 & JP 04 283147 A (TOYOTA MOTOR CORP), 8. Oktober 1992

## Beschreibung

Die Erfindung betrifft eine Knie-Rückhalteeinrichtung für Fahrzeuge mit einer Basis und einem Kniefängerbauteil, das in seiner Gesamtheit in Richtung der Knie eines Fahrzeuginsassen verschiebbar ist, mit einem Antriebsmittel, das zwischen der Basis und dem Kniefängerbauteil angeordnet ist, und mit Fang- und Positionierungsmitteln, die die Bewegungsbahn des Kniefängerbauteils wenigstens in Hoch-/Tief-Richtung des Fahrzeugs steuern und in Endstellung des Antriebsmittels eine vorbestimmte End-position des Kniefängerbauteils im Raum festlegen.

Eine gattungsgemäße Knie-Rückhalteeinrichtung ist aus der europäischen Offenlegungsschrift EP 0 684 164 A1 bekannt. Die dort beschriebene Knie-Rückhalteeinrichtung weist eine Kniefängerplatte auf, die durch einen Gassack in Richtung der Knie eines Fahrzeuginsassen bewegbar ist. Der Gassack ist durch eine Gasquelle befüllbar und ist zwischen der Basis und der Kniefängerplatte angeordnet. Fangbänder dienen sowohl zur Festlegung einer Endposition der Kniefängerplatte als auch zur Steuerung der Bewegungsbahn der Kniefängerplatte während des Entfaltungsvorganges. Die Endposition kann dabei oberhalb der Ausgangsposition der Kniefängerplatte liegen. Die Fangbänder sind innerhalb des Gassacks angeordnet. Der Gassack ist über Befestigungsringe jeweils fest mit der Kniefängerplatte bzw. der Basis verbunden. Durch die innerhalb des Gassacks angeordneten Fangbänder sind die Möglichkeiten für deren Anbringung sehr beschränkt. Auch bedingt eine geänderte Endposition der Kniefängerplatte einen geänderten Gassackaufbau, da die Endposition der Kniefängerplatte durch die Gassackwandung und die Fangbänder gemeinsam festgelegt wird. Die Befestigung des Gassacks an der Kniefängerplatte muß druckdicht und zugfest ausgeführt sein und ist daher nur unter Schwierigkeiten realisierbar.

Aus der JP 06 080058 A ist eine Knie-Rückhalteeinrichtung bekannt, die durch die Entfaltung eines Insassenschutz-Gassacks aktiviert wird. Eine in die Innenverkleidung integrierte Abdeckung wird so um eine feste vertikale Achse gedreht, daß sich das obere Ende der Abdeckung auf die Kniedes Insassen zu bewegt. Die Bewegung ist durch einen Gelenkmechanismus begrenzt.

Die WO 9815432 A zeigt eine Insassen-Schutzvorrichtung mit einem Gassack, von dem ein Teil als Knieschutzeinrichtung für den Insassen dient.

Mit der Erfindung soll eine Knie-Rückhalteeinrichtung geschaffen werden, die die Steuerung der Bewegungsbahn und die Festlegung der Endposition des Kniefängerbauteils ermöglicht und die auf einfache Weise auf verschiedene Endpositionen des Kniefängerbauteils einstellbar ist.

Erfindungsgemäß wird dies mit einer Knie-Rückhalteeinrichtung für Fahrzeuge mit den Merkmalen des Anspruchs 1 erreicht. Fang- und Positionierungsmittel steuern die Bewegungsbahn des Kniefängerbauteils wenigstens in Hoch-/Tief-Richtung des Fahrzeugs. Die Fang- und Positionierungsmittel legen in Endstellung des Antriebsmittels ebenfalls eine vorbestimmte Endposition des Kniefängerbauteils fest. Die Fang- und Positionierungsmittel sind außerhalb des Antriebsmittels angeordnet, und das Antriebsmittel liegt lose an dem Kniefängerbauteil an. Die außerhalb des Antriebsmittels angeordneten Fang- und Positionierungsmittel ermöglichen die Steuerung der Bewegungsbahn und die Festlegung der Endposition des Kniefängerbauteils. Zur Veränderung der Bewegungsbahn und der Endposition des Kniefängerbauteils müssen lediglich die Fangund Positionierungsmittel verändert werden. Dies kann ohne Veränderung des Antriebsmittels selbst geschehen. Eine veränderte Endposition des Kniefängerbauteils bewirkt auch lediglich eine veränderte Kontaktfläche des Kniefängerbauteils mit dem Antriebsmittel, da dieses lose an dem Kniefängerbauteil anliegt. Als Antriebsmittel können herkömmliche Federn, Gasdruckfedern oder auch aufblasbare Gassäcke verwendet werden.

In Weiterbildung der Erfindung ist vorgesehen, daß das Antriebsmittel einen aufblasbaren Gassack und eine Gasquelle enthält. Da die Fang- und Positionierungsmittel außerhalb des Gassacks angeordnet sind, erfordert eine veränderte Endposition des Kniefängerbauteils oder eine gewünschte andere Bewegungsbahn damit keinen geänderten Gassackzuschnitt. Da der Gassack auch nur lose an dem Kniefängerbauteil anliegt, ist auch bei veränderten Fang- und Positionierungsmitteln seine gleichmäßige Entfaltung sichergestellt.

In Weiterbildung der Erfindung ist vorgesehen, die Fang- und Positionierungsmittel als Fangbänder auszubilden. Fangbänder sind einfach und kostengünstig herzustellen und benötigen im Ruhezustand der Knie-Rückhalteeinrichtung nur wenig Platz.

Bei einer anderen bevorzugten Ausführungsform der Erfindung ist vorgesehen, die Fang- und Positionierungsmittel als Netz auszubilden, das über die gesamte Breite des Kniefängerbauteils geht. Die erheblichen Kräfte, die bei der Steuerung der Bewegungsbahn und der Festlegung der Endposition des Kniefängerbauteils auf die Fang- und Positionierungsmittel wirken, können auf diese Weise über die gesamte Breite des Kniefängerbauteils verteilt werden, so daß die Anbindung und das Kniefängerbauteil selbst gleichmäßiger belastet werden.

Entsprechend einer weiteren Ausführungsform der Erfindung sind die Fang- und Positionierungsmittel als gelenkig gelagerte Führungsarme ausgebildet. Gelenkig gelagerte Führungsarme ermöglichen eine genauere Steuerung der Bewegungsbahn des Kniefängerbauteils während des Ausfahrvorganges als bei Verwendung von Fangbändern oder Seilen.

In Weiterbildung der Erfindung sind wenigstens zwei Führungsarme vorgesehen, die parallelogrammartig angeordnet sind. Durch Anordnung der Führungsarme in Form eines Parallelogramms kann eine gewünschte Bewegungsbahn des Kniefängerbauteils, die von der Ruhelage aus schräg auf- oder abwärts gerichtet ist, auf einfache Weise verwirklicht werden.

Entsprechend einer weiteren Ausführungsform der Erfindung ist die Basis an einer bewegbaren Frontseite eines Handschuhfachs angeordnet. Hierdurch kann eine Knie-Rückhalteeinrichtung verwirklicht werden, ohne die Funktion eines vorhandenen Handschuhfachs zu beeinträchtigen. Darüber hinaus kann die Knie-Rückhalteeinrichtung in einfacher Weise als Modul gegen eine gewöhnliche Frontseite eines Handschuhfachs ausgewechselt werden.

Vorteilhafterweise ist die Frontseite des Handschuhfachs als Klappe ausgebildet, und der Gasgenerator und der Gassack sind durch eine Rohrleitung miteinander verbunden. Die Rohrleitung ist dabei in der Schwenkachse der Klappe angeordnet. Eine solche Weiterbildung ermöglicht die Anordnung des Gasgenerators räumlich getrennt von der beweglichen Frontseite des Handschuhfachs. Dies schützt zum einen den Gasgenerator vor allzu heftiger Bewegung beim Öffnen und Schließen des Handschuhfachs, da dieser beispielsweise fest an einem geeigneten Abschnitt der Fahrzeugstruktur befestigt werden kann. Zum anderen kann die Klappe flacher ausgeführt werden, was der Größe des Handschuhfachs zugute kommt. Ebenfalls möglich ist die Verwendung der Rohrleitung als Scharnierachse für die Klappe.

Gemäß einer weiteren Ausführungsform der Erfindung ist vorgesehen, das Kniefängerbauteil hinter einer ausreißbaren Verkleidung anzuordnen. Die Knie-Rückhalteeinrichtung kann auf diese Weise unsichtbar in die Instrumentenverkleidung integriert werden, und das Kniefängerbauteil kann unabhängig von optischen Anforderungen an den Fahrzeuginnenraum mit einer für die Kniefängerfunktion optimalen Oberfläche versehen werden.

Eine andere Ausführungsform der Erfindung ist dadurch gekennzeichnet, daß das Kniefängerbauteil als Handschuhfachkasten ausgebildet ist, dessen Frontseite eine Kniefängerplatte bildet und dessen Rückseite dem Gassack zugewandt ist. Auch hierdurch können die Vorteile einer Knie-Rückhalteeinrichtung verwirklicht werden, ohne daß der Stauraum des Handschuhfachs verloren geht.

In Weiterbildung der Erfindung sind die Fang- und Positionierungsmittel als Rollen oder Schieber mit passenden Führungen ausgebildet. Rollen oder Schieber mit passenden Führungen können den Handschuhfachkasten sowohl bei manuellem Auszug als auch bei Aktivierung der Knie-Rückhalteeinrichtung führen. Die Führungen können dabei geradlinig oder kurvenförmig gestaltet sein, um die Bewegungsbahn des Handschuhfachkastens zu steuern und dessen Endposition festzulegen.

Bevorzugte Ausführungsformen der Erfindung werden nachfolgend unter Bezugnahme auf die Zeichnung beschrieben. Hierbei zeigen:
Fig. 1 eine Explosionsansicht einer ersten Ausführungsform einer erfindungsgemäßen Knie-Rückhalteeinrichtung,
die Fig. 2A bis 2C schematische Seitenansichten der Knie-Rückhalteeinrichtung der Fig. 1 zur Darstellung des Bewegungsablaufs nach Aktivierung der Knie-Rückhalteeinrichtung,
Fig. 3 eine Explosionsansicht einer zweiten Ausführungsform der erfindungsgemäßen Knie-Rückhalteeinrichtung,
Fig. 4 eine perspektivische Ansicht einer dritten Ausführungsform der Erfindung,
Fig. 5 eine Explosionsansicht der Knie-Rückhalteeinrichtung der Fig. 4,
Fig. 6 eine perspektivische Ansicht einer vierten Ausführungsform der Erfindung,
Fig. 7 eine perspektivische Ansicht einer fünften Ausführungsform der Erfindung,
Fig. 8 eine perspektivische Ansicht einer sechsten Ausführungsform der Erfindung,
Fig. 9 eine Seitenansicht der Knie-Rückhalteeinrichtung der Fig. 8 und
die Figuren 10A bis 10C schematische Seitenansichten einer siebten Ausführungsform der erfindungsgemäßen Knie-Rückhalteeinrichtung.

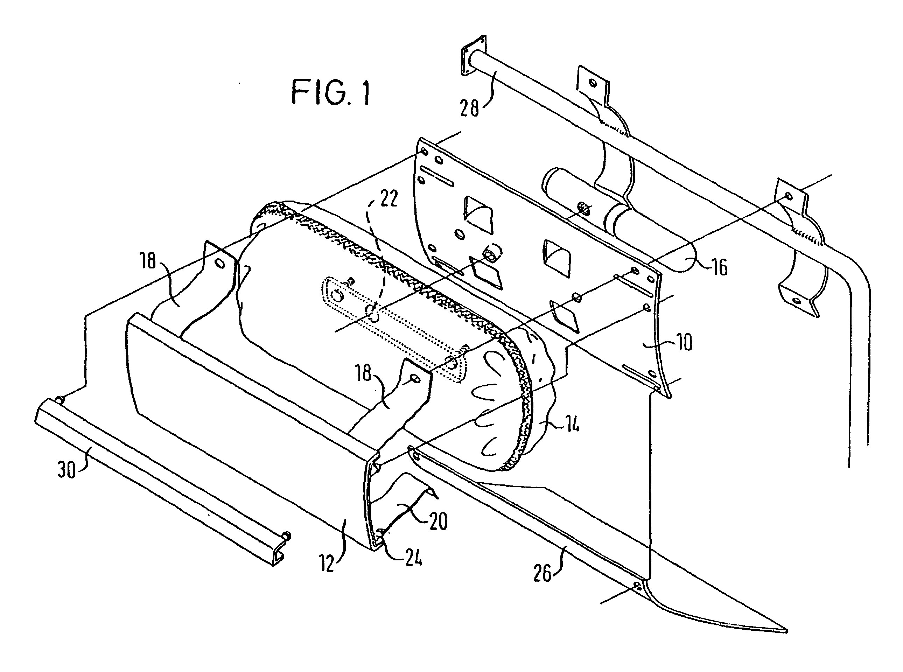

Die Knie-Rückhalteeinrichtung der Fig. 1 weist eine Basisplatte 10 und ein Kniefängerbauteil auf, das als Kniefängerplatte 12 ausgebildet ist. Zwischen Basisplatte 10 und Kniefängerplatte 12 ist als Antriebsmittel ein Gassack 14 angeordnet. Ein Gasgenerator 16 dient zum Befüllen des Gassacks 14 und wird über einen konventionellen Auslösemechanismus ausgelöst. Um die Kniefängerplatte 12 mit der Basisplatte 10 zu verbinden, sind obere Fangbänder 18 und untere Fangbänder 20 vorgesehen, die außerhalb des Gassacks 14 angeordnet sind. Der Gassack 14 ist im Bereich seiner Einblasöffnung 22 mit der Basisplatte 10 verbunden, liegt aber an der Kniefängerplatte 12 nur lose an. Die Kniefängerplatte 12 ist in ihrer Ausgangsposition mit ausreißbaren Haltestiften 24 an der Basisplatte 10 gehalten, an die auch eine Innenverkleidung 26 anschließt. Die Basisplatte 10 wird von einem Träger 28 gestützt, der Teil der Fahrzeugstruktur ist. Um einen bündigen Übergang von der Kniefängerplatte 12 auf die Innenverkleidung oberhalb der Kniefängerplatte 12 sicherzustellen, ist eine Zierleiste 30 ebenfalls an der Basisplatte 10 befestigt.

Bei Aktivierung des Gasgenerators 16 befüllt dieser über die Einblasöffnung 22 den Gassack 14. Da der Gassack 14 zwischen Basisplatte 10 und Kniefängerplatte 12 angeordnet ist, reißen die Haltestifte 24 aus, und die Kniefängerplatte 12 bewegt sich von der Basisplatte 10 weg in Richtung auf die Knie eines Fahrzeuginsassen. Die oberen Fangbänder 18 sind dabei so angeordnet, daß sie bereits kurz nach Aktivierung des Gasgenerators 16 gespannt sind. Die Kniefängerplatte beschreibt daher bei weiterer Befüllung des Gassacks 14 im Bereich der Befestigung der oberen Fangbänder 18 eine Kreisbahn um die Befestigungspunkte der oberen Fangbänder 18 an der Basisplatte 10. Die unteren Fangbänder 20 werden erst mit Erreichen der Endposition der Kniefängerplatte 12 gespannt. Ausgehend von ihrer Ausgangsposition beschreibt die Kniefängerplatte 12 demnach eine schräg aufwärts gerichtete Bewegungsbahn, die durch die Länge und die Befestigungspunkte der Fangbänder 18, 20 festgelegt ist. Der Gassack 14 dient dabei lediglich als Antrieb für die Kniefängerplatte 12, und die schräg aufwärts gerichtete Bewegung der Kniefängerplatte 12 wird ausschließlich durch die Fangbänder 18, 20 gesteuert. Die Endposition und die Bewegungsbahn der Kniefängerplatte 12 sind damit auf einfache Weise einstellbar. Ohne den Gassack 14 modifizieren zu müssen, werden dazu die Länge und die Befestigungspunkte der Fangbänder 18, 20 verändert. Da der Gassack 14 lediglich lose an der Kniefängerplatte 12 anliegt und sich die Kontaktfläche demzufolge verschieben kann, behindert eine veränderte Endposition der Kniefängerplatte 12 nicht die gleichmäßige Entfaltung des Gassacks 14. Die Anpassung der Knie-Rückhalteeinrichtung an verschiedene Einbaupositionen oder Fahrzeugtypen ist damit auf einfache Weise möglich.

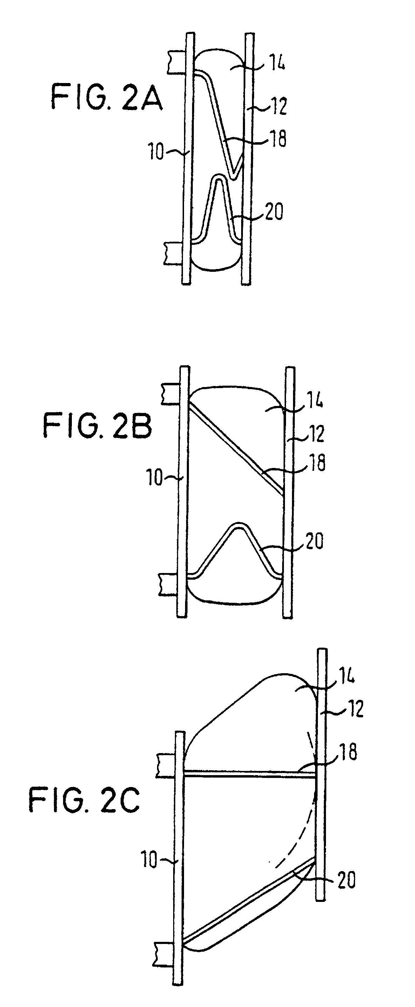

In den Fig. 2A bis 2C ist der Bewegungsablauf der Knie-Rückhalteeinrichtung der Fig. 1 durch schematische Seitenansichten dargestellt. In der Fig. 2A befindet sich die Kniefängerplatte 12 in ihrer Ausgangsposition vor Aktivierung des Gasgenerators. Der Gassack 14 ist im zusammengefalteten Zustand zwischen der Kniefängerplatte 12 und der Basisplatte 10 angeordnet. Das obere Fangband 18 ist im oberen Bereich der Basisplatte 10 und im mittleren Bereich der Kniefängerplatte 12 befestigt. Das untere Fangband 20 ist sowohl an der Basisplatte 10 als auch an der Kniefängerplatte 12 im unteren Bereich befestigt. In der Ausgangsposition der Fig. 2A sind die Fangbänder 18 und 20 nicht gespannt. Nach Aktivierung der Knie-Rückhalteeinrichtung dehnt sich der Gassack 14 aus und bewegt die Kniefängerplatte 12 von der Basisplatte 10 weg. Bereits kurz nach Verlassen der Ausgangsposition ist das obere Fangband 18, wie in der Fig. 2B gezeigt ist, gespannt. Das untere Fangband 20 ist dahingegen noch nicht gespannt. Bei weiterer Befüllung und Ausdehnung des Gassacks 14 bewegt sich der Befestigungspunkt des oberen Fangbandes 18 an der Kniefängerplatte 12 auf einer Kreisbahn, deren Radius durch die Länge des oberen Fangbands 18 bestimmt ist und die in der Fig. 2C durch eine gestrichelte Linie angedeutet ist. Die Kniefängerplatte behält während dieser aufwärts gerichteten Bewegung ihre aufrechte Position im wesentlichen bei, da die durch den expandierenden Gassack auf die Kniefängerplatte 12 aufgebrachten Kräfte oberhalb und unterhalb des Befestigungspunkts des Fangbands 18 an der Kniefängerplatte 12 im wesentlichen gleich groß sind. Die Bewegung der Kniefängerplatte 12 wird in ihrer, in der Fig. 2C dargestellten Endposition durch das untere Fangband 20 gestoppt, das sich in dieser Endposition der Kniefängerplatte im gespannten Zustand befindet.

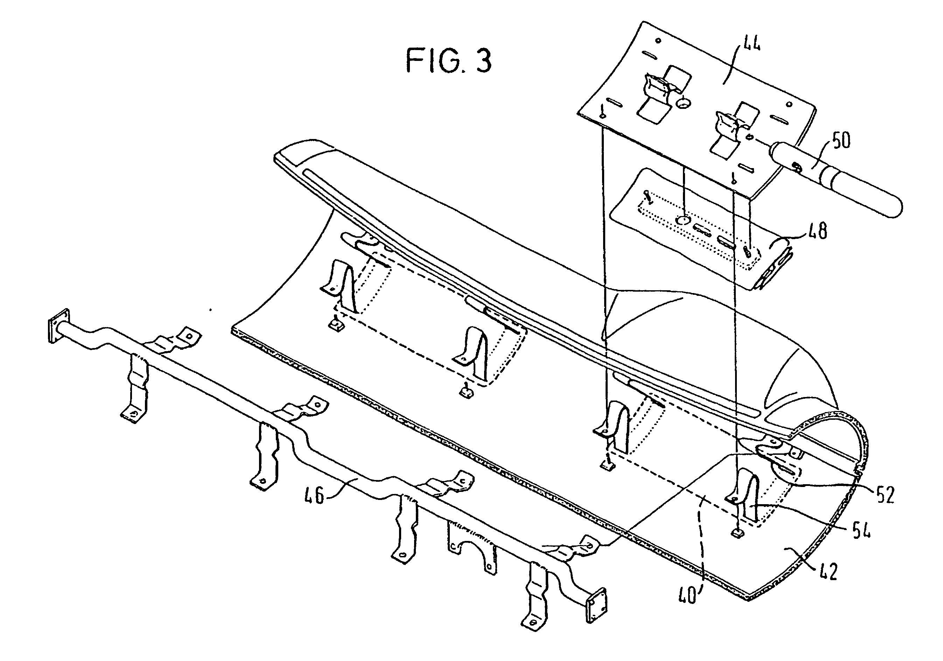

Fig. 3 zeigt eine zweite Ausführungsform der erfindungsgemäßen Knie-Rückhalteeinrichtung. Auch hier weist das Kniefängerbauteil die Form einer Kniefängerplatte 40 auf, die einstückig mit einem Armaturenträger 42 ausgebildet ist. Die Kniefängerplatte 40 ist mit einer ausreißbaren Sollbruchstelle gegen den Armaturenträger 42 abgegrenzt. Eine Basisplatte 44 wird an dem Armaturenträger 42 befestigt. Armaturenträger 42 und Basisplatte 44 werden gemeinsam über einen Träger 46 abgestützt und mit der Fahrzeugstruktur verbunden. Zwischen Basisplatte 44 und Kniefängerplatte 40 ist ein Gassack 48 angeordnet, der von einem Gasgenerator 50 befüllt wird. Der Gasgenerator 50 ist durch Umfalten von vier Laschen, die in der Basisplatte 44 ausgestanzt sind, mit dieser verbunden. Bei Aktivierung des Gasgenerators 50 füllt sich der Gassack 48 und übt eine von der Basisplatte 44 weg gerichtete Kraft auf die Kniefängerplatte 40 aus. Die die Kniefängerplatte 40 umgebende Sollbruchstelle reißt dadurch aus, so daß sich die Kniefängerplatte 40 in Richtung der Knie eines Fahrzeuginsassen bewegen kann. Die Kniefängerplatte 40 wird dabei durch obere Fangbänder 52 und untere Fangbänder 54 gesteuert. Die Fangbänder 52 und 54 einer jeweiligen Seite der Kniefängerplatte 40 bestehen aus einem einzigen Band, das zwischen die Schichten der zweischichtig ausgebildeten Kniefängerplatte 40 gelegt ist. Während des Herstellungsprozesses des Armaturenträgers 42 und der Kniefängerplatte 40 kann hierdurch auf einfache Weise eine sichere Befestigung der Fangbänder 52, 54 an der Kniefängerplatte 40 erreicht werden. Die Steuerung der Bewegungsbahn und die Festlegung der Endposition der Kniefängerplatte 40 erfolgt dabei durch die oberen Fangbänder 52, die bereits kurz nach Aktivierung des Gasgenerators 50 gespannt sind.

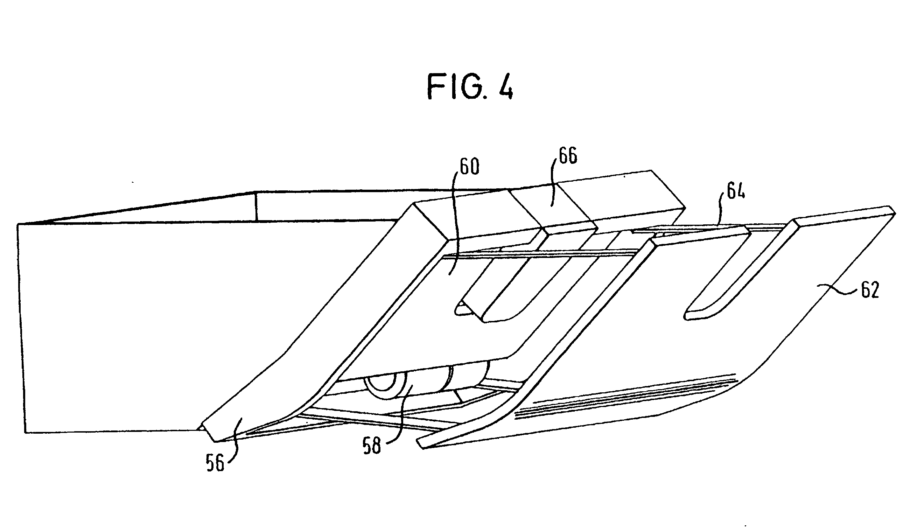

Die Knie-Rückhalteeinrichtung der Fig. 4 ist in der beweglichen Frontseite eines Handschuhfachs angeordnet. Die Frontseite ist als Klappe 56 ausgebildet. Die Klappe 56 dient auch als Basisplatte für die Knie-Rückhalteeinrichtung, und ein Gasgenerator 58 und ein Gassack 60 sind auf der Klappe angeordnet. Eine Kniefängerplatte 62 ist in der Fig. 4 der besseren Übersichtlichkeit halber in ihrer, den Knien eines Fahrzeuginsassen zugewandten Endposition dargestellt. In ihrer Ruheposition schließt die Kniefängerplatte 62 bündig mit dem Rahmen der Klappe 56 ab und bildet einen Teil der Innenverkleidung. Fangbänder 64 verbinden die als Basisplatte verwendete Klappe 56 und die Kniefängerplatte 62. Die Klappe 56 wird im Ruhezustand mittels eines Verschlußes 66 an einer Fahrzeugstruktur oder einer Innenverkleidung gehalten und kann zum Öffnen des Handschuhfachs um ihre dem Verschluß 66 gegenüberliegende Seite geklappt werden. Im Ruhezustand kann die Kniefängerplatte 62 durch ausreißbare Befestigungen an der Klappe 56 gehalten werden. Bei Aktivierung des Gasgenerators 58 stützt sich der Gassack 60 zwischen der Klappe 56 und der Kniefängerplatte 62 ab und bewegt die Kniefängerplatte 62, gesteuert durch die Fangbänder 64, in Richtung der Knie des Fahrzeuginsassen.

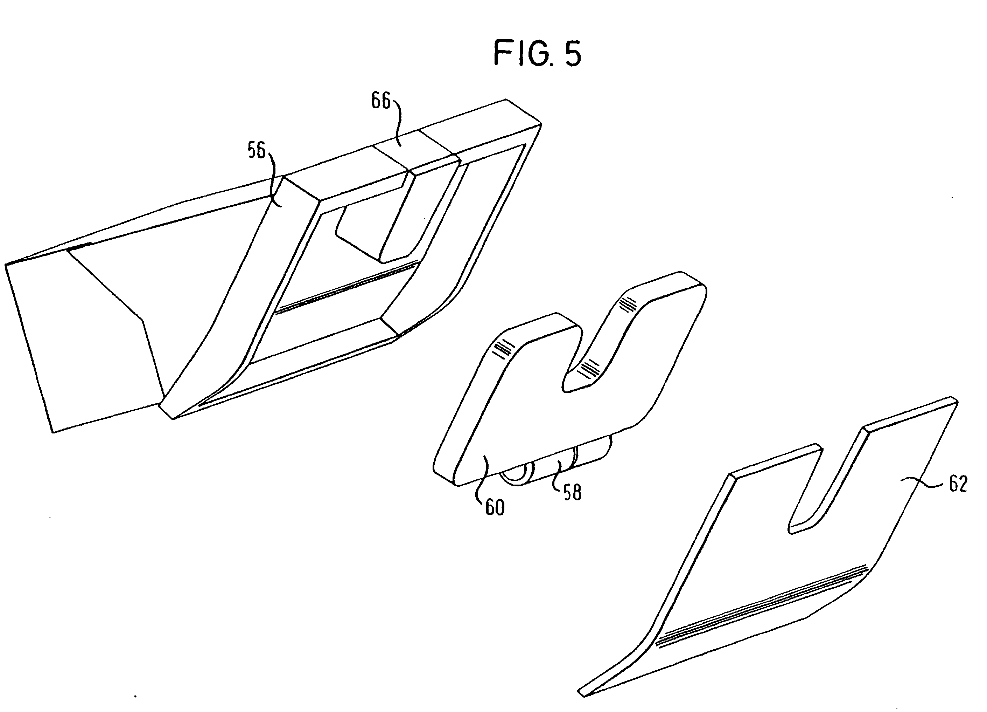

Fig. 5 zeigt eine Explosionsansicht der Knie-Rückhalteeinrichtung der Fig. 4. Die Klappe 56 weist in ihrem oberen Bereich den Verschluß 66 auf, der sich bis zur Außenfläche der Instrumentenverkleidung erstreckt, so daß er vom Fahrzeuginsassen betätigt werden kann. Der Gassack 60 und die Kniefängerplatte 62 sind aus diesem Grund mit einer Aussparung im Bereich des Verschlußes 66 versehen, so daß dieser betätigt werden kann und die Entfaltung des Gassacks 60 und die Bewegung der Kniefängerplatte 62 nicht beeinträchtigt.

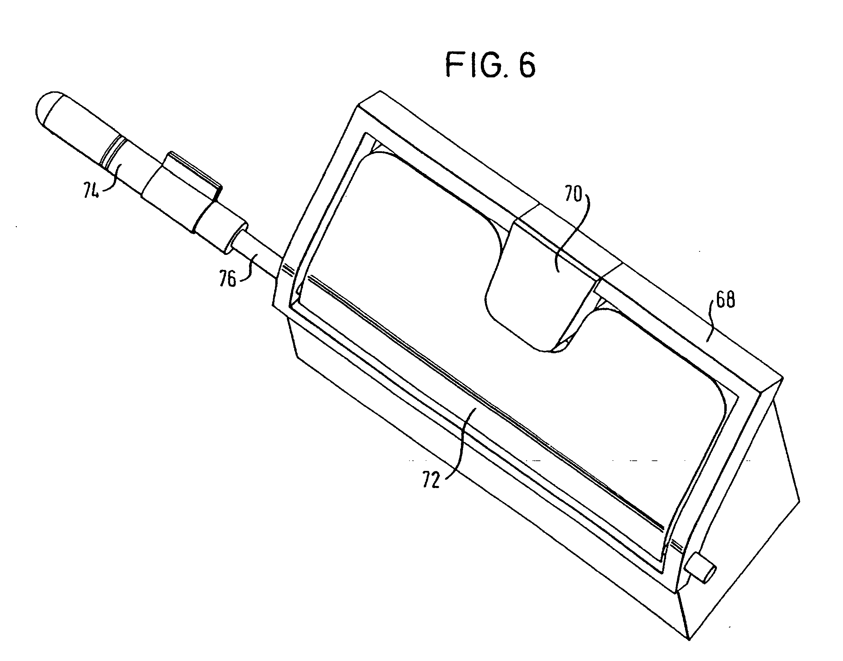

Die Ausführungsform der Fig. 6 weist ebenfalls eine Klappe 68 eines Handschuhfachs auf, die als Basisplatte für die Knie-Rückhalteeinrichtung dient. Wie bei der Ausführungsform der Fig. 4 und 5 ist die Klappe 68 mit einem Verschluß 70 versehen. Die Kniefängerplatte 72 ist ebenfalls mit einer Aussparung im Bereich des Verschlußes 70 versehen, und ein Gassack ist zwischen der Klappe 68 und der Kniefängerplatte 72 angeordnet. Ein Gasgenerator 74 ist bei dieser Ausführungsform außerhalb der Klappe 58 angeordnet und befüllt den Gassack über eine Rohrleitung 76. Die Rohrleitung 76 ist in der Schwenkachse der Klappe 68 angeordnet und dient gleichzeitig als Scharnierachse.

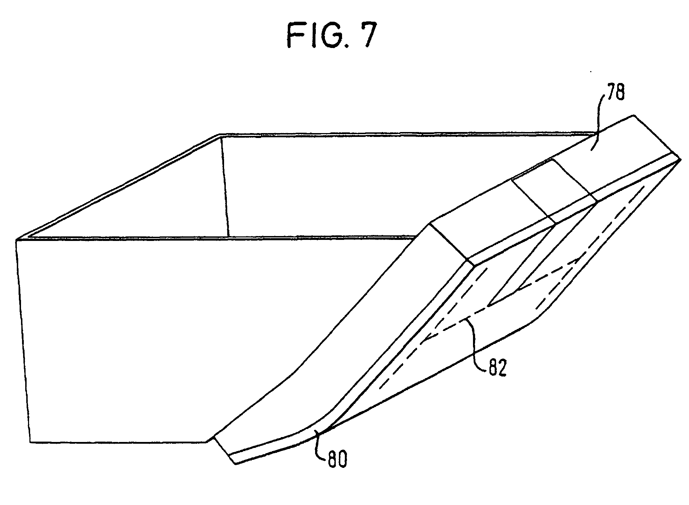

In der Fig. 7 ist eine weitere Ausführungsform der Erfindung dargestellt, bei der Gassack, Gasgenerator und Kniefängerbauteil innerhalb einer Handschuhfachklappe 78 angeordnet sind. Die Handschuhfachklappe 78 weist an ihrer dem Fahrzeuginnenraum zugewandten Seite eine Verkleidung 80 auf, die mit Sollbruchstellen 82 versehen ist. Nach Aktivierung des Gasgenerators reißen die Sollbruchstellen 82 auf, und das Kniefängerbauteil bewegt sich ungehindert in Richtung der Knie eines Fahrzeuginsassen.

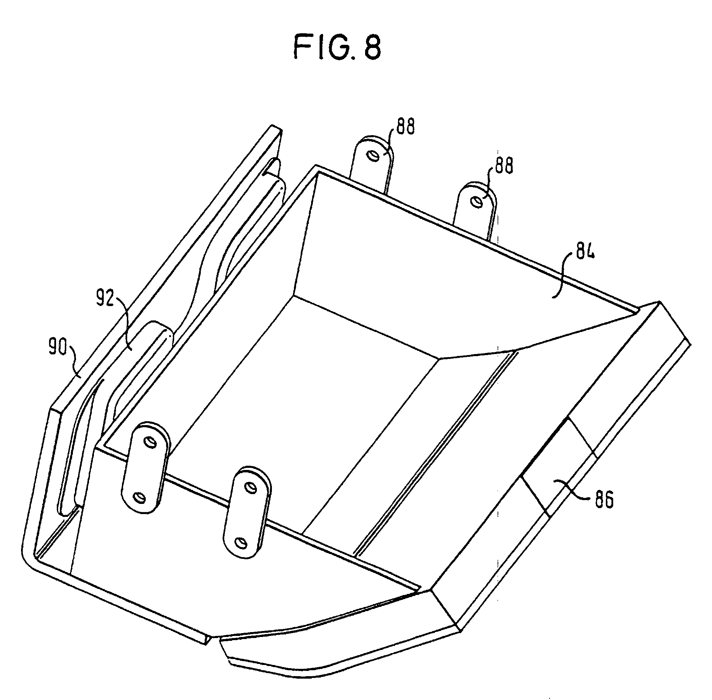

Die in der Fig. 8 dargestellte Ausführungsform der Erfindung ist mit einem Kniefängerbauteil versehen, das als Handschuhfachkasten 84 ausgebildet ist. Zum Öffnen und Verschließen des Handschuhfachkastens 84 dient ein Verschluß 86, der an der Seite des Handschuhfachkastens 84 angeordnet ist, die dem Fahrzeuginnenraum zugewandt ist. Der Handschuhfachkasten 84 wird durch vier Führungsarme 88 geführt, die parallelogrammartig angeordnet sind und auch bei Aktivierung der Knie-Rückhalteeinrichtung als Fang- und Positionierungsmittel dienen. Die Führungsarme 88 sind einerseits mit dem Handschuhfachkasten 84 und andererseits mit der hier nicht dargestellten Fahrzeugstruktur verbunden. Zwischen der Rückseite des Handschuhfachkastens 84 und einer Basis 90 ist ein Gassack 92 angeordnet. Wird der Gassack 92 befüllt, bewegt er den Handschuhfachkasten 84 in Richtung der Knie eines Fahrzeuginsassen, indem er sich zwischen der Basis 90 und der Rückseite des Handschuhfachkastens 84 abstützt. Der Verschluß 86 ist dabei so ausgebildet, daß er der beim Befüllen des Gassacks 90 erzeugten hohen Schubkraft nicht standhält und den Handschuhfachkasten 84 freigibt.

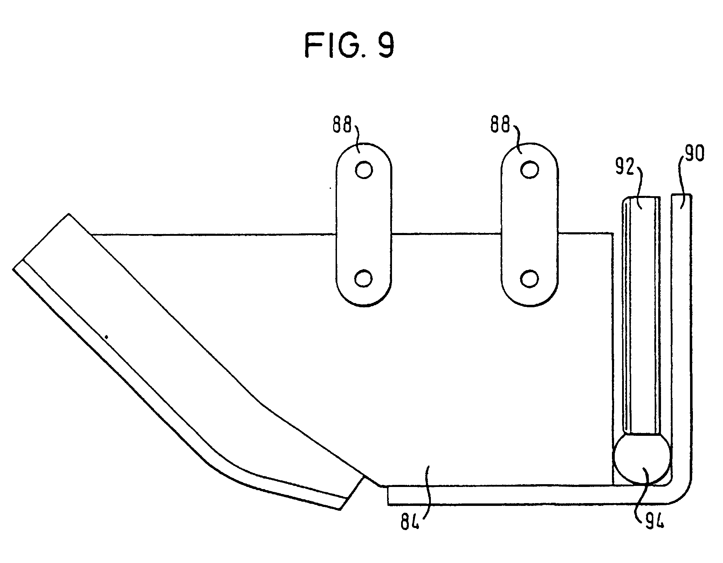

Fig. 9 zeigt eine Seitenansicht der Knie-Rückhalteeinrichtung der Fig. 8. Es ist gut zu erkennen, daß der Gassack 92 zwischen dem Handschuhfachkasten 84 und der Basis 90 oberhalb eines Gasgenerators 94 angeordnet ist. Nach Aktivierung des Gasgenerators 94 füllt sich der Gassack 92 und bewegt den Handschuhfachkasten 84 in der Fig. 9 nach links. Die Bewegungsbahn des Handschuhfachkastens 84 ist dabei durch die Führungsarme 88 festgelegt und führt aufgrund der parallelogrammartigen Anordnung der Führungsarme 88 in der Ebene der Fig. 9 nach links oben. Im Fahrzeug führt eine solche Bewegung schräg aufwärts in Richtung Fahrzeuginnenraum, und die Frontseite des Handschuhfachkastens 84 steht damit bis zum Erreichen ihrer Endposition in einem für den Aufprall der Knie eines Fahrzeuginsassen günstigen Winkel.

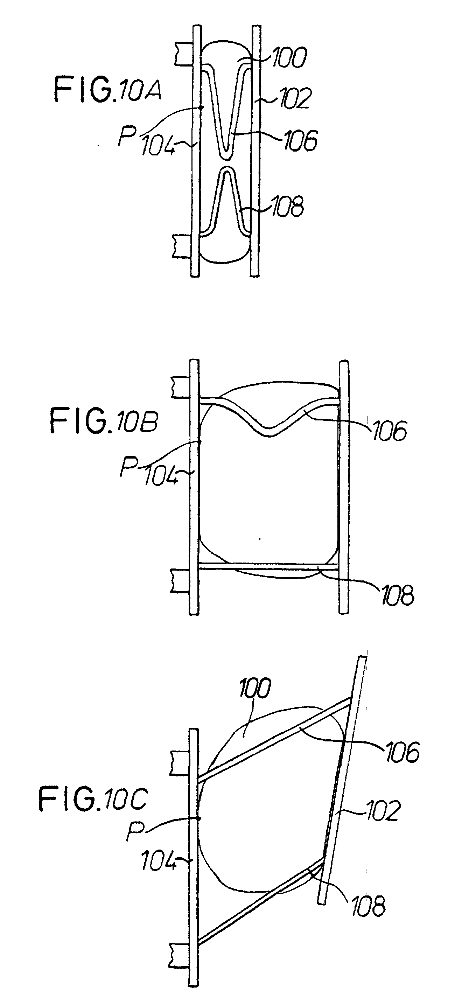

Eine weitere Ausführungsform der erfindungsgemäßen Knie-Rückhalteeinrichtung ist in den Figuren 10A bis 10C schematisch dargestellt. Ein Gassack 100 ist dort zwischen einer Kniefängerplatte 102 und einer Grundplatte 104, die mit einer nur ansatzweise dargestellten Fahrzeugstruktur verbunden ist, angeordnet. Kniefängerplatte 102 und Grundplatte 104 sind über wenigstens ein oberes Fangband 106 und über wenigstens ein unteres Fangband 108 miteinander verbunden.

Bei nicht entfaltetem Gassack 100 ist weder das obere Fangband 106 noch das untere Fangband 108 gespannt, wie in der Fig. 10A gezeigt ist. Der Gassack 100 ist mit der Grundplatte 104 an einem oberhalb der Mitte der Grundplatte 104 liegenden Punkt P verbunden. Im Verlauf der Entfaltung des Gassacks 100 wird, wie der Fig. 10B zu entnehmen ist, zunächst das untere Fangband 108 gespannt.

In der in der Fig. 10C gezeigten Endposition der Kniefängerplatte 102 sind dann beide Fangbänder 106 und 108 gespannt. Aufgrund der größeren Länge des oberen Fangbands 106 gegenüber der Länge des unteren Fangbands 108 nimmt die Kniefängerplatte 102 eine gegenüber der Vertikalen geneigte Endposition ein. Darüber hinaus ist die Kniefängerplatte 102 gegenüber ihrer Ausgangslage nach oben verschoben. Die Verschiebung der Kniefängerplatte 102 nach oben ergibt sich durch das Zusammenwirken des Gassacks 100 mit den Fangbändern 106 und 108. Beim Befüllen des Gassacks 100 richtet sich dieser aufgrund seiner im wesentlichen zylindrischen Form so aus, daß er die Grundplatte 104 nur noch auf einer Fläche berührt, die zu einer senkrecht zur Zeichenebene der Fig. 10 und durch den Punkt P verlaufenden Linie symmetrisch ist. Da der Befestigungspunkt P des Gassacks 100 an der Grundplatte 104 oberhalb deren Mitte liegt, wird der Gassack 100 gegenüber seiner Ausgangslage nach oben verlagert, so daß auch die durch die Fangbänder 106 und 108 gesteuerte Bewegung der Kniefängerplatte 102 eine Aufwärtskomponente erhält.

## Patentansprüche

1. Knie-Rückhalteeinrichtung für Fahrzeuge, mit einer Basis (10; 44; *56;* 78; 90) und einem Kniefängerbauteil (12; 40; 62; 72; 84), das in seiner Gesamtheit in Richtung der Knie eines Fahrzeuginsassen verschiebbar ist, mit einem Antriebsmittel (14, 16; 48, 50; 60, 58; 74; 92, 94) das zwischen der Basis (10; 44; 56; 78; 90) und dem Kniefängerbauteil (12; 40; 62; 72; 84) angeordnet ist, und mit Fangund Positionierungsmitteln (18, 20; 52, 54; 64; 88), die die Bewegungsbahn des Kniefängerbauteils (12; 40; 62; 72; 84) wenigstens in Hoch-/Tief-Richtung des Fahrzeugs steuern und in Endstellung des Antriebsmittels (14, 16; 48, 50; 60, 58; 74; 92, 94) eine vorbestimmte Endposition des Kniefängerbauteils (12; 40; 62; 72; 84) im Raum festlegen, **dadurch gekennzeichnet, daß** die Fang- und Positionierungsmittel (18, 20; 52, 54; 64; 88) außerhalb des Antriebsmittels (14, 16; 48, 50; 60, 58; 74; 92, 94) angeordnet sind und das Antriebsmittel (14, 16; 48, 50; 60, 58; 74; 92, 94) lose an dem Kniefängerbauteil (12; 40; 62; 72; 84) anliegt.

2. Knie-Rückhalteeinrichtung nach Anspruch 1, **dadurch gekennzeichnet, daß** das Antriebsmittel einen aufblasbaren Gassack (14; 48; 60; 92) und eine Gasquelle (16; 50; 58; 74; 94) enthält.

3. Knie-Rückhalteeinrichtung nach Anspruch 1 oder Anspruch 2, **dadurch gekennzeichnet, daß** die Fang- und Positionierungsmittel als Fangbänder (18, 20; 52, 54; 64) ausgebildet sind.

4. Knie-Rückhalteeinrichtung nach Anspruch 1 oder Anspruch 2, **dadurch gekennzeichnet, daß** die Fang- und Positionierungsmittel als Netz ausgebildet sind, das sich über die gesamte Breite des Kniefängerbauteils erstreckt.

5. Knie-Rückhalteeinrichtung nach Anspruch 1 oder Anspruch 2, **dadurch gekennzeichnet, daß** die Fang- und Positionierungsmittel als gelenkig gelagerte Führungsarme (88) ausgebildet sind.

6. Knie-Rückhalteeinrichtung nach Anspruch 5, **dadurch gekennzeichnet, daß** wenigstens zwei Führungsarme (88) vorgesehen sind, die parallelogrammartig angeordnet sind.

7. Knie-Rückhalteeinrichtung nach einem der vorstehenden Ansprüche, **dadurch gekennzeichnet, daß** die Basis an einer bewegbaren Frontseite (56; 68; 78) eines Handschuhfachs angeordnet ist.

8. Knie-Rückhalteeinrichtung nach Anspruch 7, **dadurch gekennzeichnet, daß**
- die Frontseite des Handschuhfachs als Klappe (68) ausgebildet ist,
- das Antriebsmittel eine Gasquelle (74) und einen Gassack enthält,
- die Gasquelle (74) und der Gassack durch eine Rohrleitung (76) miteinander verbunden sind und
- die Rohrleitung (74) in der Schwenkachse der Klappe (68) angeordnet ist.

9. Knie-Rückhalteeinrichtung nach einem der vorstehenden Ansprüche, **dadurch gekennzeichnet, daß** das Kniefängerbauteil hinter einer ausreißbaren Verkleidung (80) angeordnet ist.

10. Knie-Rückhalteeinrichtung nach einem der vorstehenden Ansprüche, **dadurch gekennzeichnet, daß** das Kniefängerbauteil als Handschuhfachkasten (84) ausgebildet ist, dessen Frontseite eine Kniefängerplatte bildet und dessen Rückseite dem Antriebsmittel (92) zugewandt ist.

11. Knie-Rückhalteeinrichtung nach Anspruch 9, **dadurch gekennzeichnet, daß** die Fang- und Positionierungsmittel als Rollen oder Schieber mit passenden Führungen ausgebildet sind.

## Claims

1. A knee restraint device for vehicles, with a base (10; 44; 56; 78; 90) and a knee protector component (12; 40; 62; 72; 84) which is displaceable in its entirety towards the knees of a vehicle occupant, with a drive means (14, 16; 48, 50; 60, 58; 74; 92, 94) which is arranged between the base (10; 44; 56; 78; 90) and the knee protector component (12; 40; 62; 72; 84), and with tether and positioning means (18, 20; 52, 54; 64; 88) which control the movement path of the knee protector component (12; 40; 62; 72; 84) at least in the up/down direction of the vehicle and which, in the limit of travel of the drive means (14, 16; 48, 50; 60, 58; 74; 92, 94), define a predetermined end position of the knee protector component (12; 40; 62; 72; 84) in the space, **characterized in that** the tether and positioning means (18, 20; 52, 54; 64; 88) are arranged outside the drive means (14, 16; 48, 50; 60, 58; 74; 92, 94) and the drive means (14, 16; 48, 50; 60, 58; 74; 92, 94) loosely contacts the knee protector component (12; 40; 62; 72; 84).

2. The knee restraint device according to Claim 1, **characterized in that** the drive means contains an inflatable gas bag (14; 48; 60; 92) and a gas source (16; 50; 58; 74; 94).

3. The knee restraint device according to Claim 1 or Claim 2, **characterized in that** the tether and positioning means are configured as tethers (18, 20; 52, 54; 64).

4. The knee restraint device according to Claim 1 or Claim 2, **characterized in that** the tether and positioning means are constructed as a net which extends over the entire width of the knee protector component.

5. The knee restraint device according to Claim 1 or Claim 2, **characterized in that** the tether and positioning means are configured as pivotally mounted guide arms (88).

6. The knee restraint device according to Claim 5, **characterized in that** at least two guide arms (88) are provided which are arranged in the manner of a parallelogram.

7. The knee restraint device according to any one of the preceding claims, **characterized in that** the base is arranged on a movable front face (56; 68; 78) of a glove compartment.

8. The knee restraint device according to Claim 7, **characterized in that**
- the front face of the glove compartment is formed as a flap (68),
- the drive means contains a gas source (74) and a gas bag,
- the gas source (74) and the gas bag are in communication with each other by a pipeline (76) and
- the pipeline (76) is arranged in the swivel axis of the flap (68).

9. The knee restraint device according to any one of the preceding claims, **characterized in that** the knee protector component is arranged behind a lining (80) which is capable of being torn out.

10. The knee restraint device according to any one of the preceding claims, **characterized in that** the knee protector component is formed as a glove box (84), the front face of which forms a knee protector plate and the rear face of which faces the drive means (92).

11. The knee restraint device according to Claim 9, **characterized in that** the tether and positioning means are formed as rollers or sliders with suitable guides.

## Revendications

1. Dispositif de retenue des genoux pour véhicules, comportant une base (10 ; 44 ; 56 ; 78 ; 90) et un élément appuie-genoux (12 ;40 ; 62 ; 72 ; 84) qui est déplaçable dans son ensemble en direction des genoux d'un passager, un moyen d'entraînement (14, 16 ; 48, 50 ; 60, 58 ; 74 ; 92, 94) qui est agencé entre la base (10 ; 44 ; 56 ; 78 ; 90) et l'élément appuie-genoux (12 ;40 ; 62 ; 72 ; 84), et des moyens de retenue et de positionnement (18, 20 ; 52, 54 ; 64 ; 88) qui commandent la trajectoire de mouvement de l'élément appuie-genoux (12 ; 40 ; 62 ; 72 ; 84) au moins en direction vers le haut et vers le bas du véhicule et qui, en position terminale du moyen d'entraînement (14, 16 ; 48, 50 ; 60, 58 ; 74 ; 92, 94), définissent une position terminale prédéterminée de l'élément appuie-genoux (12 ;40 ; 62 ; 72 ; 84) dans l'espace, **caractérisé en ce que** les moyens de retenue et de positionnement (18, 20 ; 52, 54 ; 64 ; 88) sont agencés en dehors du moyen d'entraînement (14, 16 ; 48, 50 ; 60, 58 ; 74 ; 92, 94) et **en ce que** le moyen d'entraînement (14, 16 ; 48, 50 ; 60, 58 ; 74 ; 92, 94) est en contact libre sur l'élément appuie-genoux (12 ; 40 ; 62 ; 72 ; 84).

2. Dispositif de retenue des genoux selon la revendication 1, **caractérisé en ce que** le moyen d'entraînement contient un coussin à gaz gonflable (14 ; 48 ; 60 ; 92) et une source de gaz (16 ; 50 ; 58 ; 74 ; 94).

3. Dispositif de retenue des genoux selon la revendication 1 ou 2, **caractérisé en ce que** les moyens de retenue et de positionnement (18, 20 ; 52, 54 ; 64) sont réalisés sous forme de rubans de retenue.

4. Dispositif de retenue des genoux selon la revendication 1 ou la revendication 2, **caractérisé en ce que** les moyens de retenue et de positionnement sont réalisés sous forme de filet qui s'étend sur toute la largeur de l'élément appuie-genoux.

5. Dispositif de retenue des genoux selon la revendication 1 ou la revendication 2, **caractérisé en ce que** les moyens de retenue et de positionnement sont réalisés sous forme de bras de guidage (88) à montage articulé.

6. Dispositif de retenue des genoux selon la revendication 5, **caractérisé en ce qu'**il est prévu au moins deux bras de guidage (88) qui sont agencés à la manière d'un parallélogramme.

7. Dispositif de retenue des genoux selon l'une des revendications précédentes, **caractérisé en ce que** la base est agencée sur une face frontale mobile (56 ; 58 ; 78) d'une boîte à gants.

8. Dispositif de retenue des genoux selon la revendication 7, **caractérisé en ce que**
- la face frontale de la boîte à gants est réalisée sous forme de volet (68),
- le moyen d'entraînement contient une source de gaz (74) et un coussin à gaz,
- la source de gaz (74) et le coussin à gaz sont reliés entre eux par une conduite tubulaire (76), et
- la conduite tubulaire (74) est agencée dans l'axe de pivotement du volet (68).

9. Dispositif de retenue des genoux selon l'une des revendications précédentes, **caractérisé en ce que** l'élément appuie-genoux est agencé derrière un revêtement (80) déchirable.

10. Dispositif de retenue des genoux selon l'une des revendications précédentes, **caractérisé en ce que** l'élément appuie-genoux est réalisé sous forme de casier de boîte à gants (84) dont la face frontale forme une plaque appuie-genoux et dont la face postérieure est tournée vers le moyen d'entraînement (92).

11. Dispositif de retenue des genoux selon la revendication 9, **caractérisé en ce que** les moyens de retenue et de positionnement sous réalisés sous forme de rouleaux ou de coulisseaux avec guidages adaptés.
